# EUROPÄISCHE PATENTSCHRIFT

(11) **EP 0 905 850 B1**
(45) Veröffentlichungstag und Bekanntmachung des Hinweises auf die Patenterteilung: **30.10.2002**
(21) Anmeldenummer: 98113622.9
(22) Anmeldetag: 22.07.1998
(51) Int. Cl.: H02H 7/085, B25B 23/147

(54) **Ansteuerung für einen an einem Spannungsnetz mit zwei Netzstromanschlüssen betriebenen Elektromotor**
Control for an electric motor driven by two phase mains
Pilotage d'un moteur électrique alimenté par secteur biphasé

(30) Priorität: 29.09.1997 DE 19742916
(43) Veröffentlichungstag der Anmeldung: 31.03.1999
(73) Patentinhaber: Westfalia Werkzeugcompany Gesellschaft mit beschränkter Haftung, 58093 Hagen (DE)
(72) Erfinder: Klingbeil, Thomas Dipl.-Ing., 46240 Bottrop (DE)
(74) Vertreter: Stark, Walter, Dr.-Ing.

(56) Entgegenhaltungen:
- EP-A- 0 659 525
- DE-A- 2 343 661
- DE-A- 2 835 382
- US-A- 4 249 117
- US-A- 4 462 467

## Beschreibung

Die Erfindung betrifft eine Ansteuerung für einen an einem Spannungsnetz mit zwei Netzstromanschlüssen (A, B) betriebenen, insbesondere in eine bewegbare und/oder handgeführte Maschine integrierten Elektromotor mit zumindest zwei Netzstromanschlußklemmen (C, D) mit den folgenden Merkmalen:
1) die Netzstromanschlußklemme (C) (bzw. die Netzstromanschlußklemme (D)) ist über ein mit dem Elektromotor (2) und einem Stellglied (3) in Reihe geschaltetes, die Stromaufnahme des Elektromotors (2) messendes Bauteil (4) mit dem Netzstromanschluß (A) (bzw. dem Netzstromanschluß (B)) verbunden,
2) die Netzstromanschlußklemme (D) (bzw. die Netzstromanschlußklemme (C)) ist mit dem Netzstromanschluß (B) (bzw. dem Netzstromanschluß (A)) verbunden,
3) ein Microcontroller (5) ist jeweils mit dem die Stromaufnahme des Elektromotors (2) messenden Bauteil (4) und dem Stellglied (3) verbunden,
4) die Ansteuerung (1) weist einen Schalter (6) wie z. B. einen An-/Aus-Schalter, ein Potentiometer (7), ein Tastenfeld (8) oder dergleichen zur Aktivierung des Elektromotors (2) auf und
5) ein mit einem Netzstromanschluß (A oder B) verbundener Phasendetektor (16) ist an dem Microcontroller (5) angeschlossen.

Aus dem Dokument US-A-4 249 117 ist eine solche Ansteuerung bekannt.

Aus der Praxis sind bewegbare und/oder handgeführte Maschinen in vielfältigen Ausführungen wie z. B. Waschmaschinen, Elektromixer, Küchenmaschinen bzw. elektrische Werkzeuge wie Bohrmaschinen, Schleifmaschinen, Trennschleifer, Kreis- oder Stichsägen etc. bekannt.

Beim Betrieb der Maschine kann sich aus verschiedensten Gründen die Belastung des Elektromotors deutlich erhöhen, und dieser wird im Überlastfall einem gesteigerten Verschleiß unterworfen bis hin zur vollständigen Zerstörung. Auch kann der Benutzer der Maschine gefährdet werden, z. B. wenn bei Überbelastung einer Bohrmaschine der Bohrer plötzlich durch Fressen blockiert und dementsprechend sich die Bohrmaschine dann um den Bohrer dreht.

Aus diesen Grund können solche Maschinen mit elektronischen Sicherungen gegen Überbelastung geschützt werden, wodurch - im Gegensatz zu Schmelzsicherungen oder mechanischen Sicherungen wie z. B. Sollbruchstellen oder dergleichen - nach Auslösung der Sicherung ein Austausch eines zerstörten Bauteils entfällt, und außerdem das Ansprechverhalten beliebig programmierbar ist. Für die Betriebssicherheit ist es vor allem wichtig, daß die Sicherung schnell auslöst und der Auslösepunkt genau festgelegt werden kann, um den im Betrieb nutzbaren Lastbereich der Maschine nicht unnötig zu verkleinern.

Nachteilig bei bisherigen, schnell auslösenden elektronischen Sicherungen ist, daß aufgrund der notwendigen Effektivwertbestimmung des Laststromes ein hoher Bauteileaufwand erforderlich ist, insbesondere um die nötige Genauigkeit zu erzielen, und bei einer starken Dynamik des Laststromes lediglich ungenaue Meßwerte erzielbar sind, wodurch entweder der Auslösepunkt deutlich niedriger als eigentlich nötig festgelegt werden muß oder aber der Elektromotor im Betrieb unnötig oft in einen zumindest kritischen Bereich kommen kann.

Weiter ist es, neben dem durch die erforderlichen, eng tolerierten und somit kostspieligen Bauteile verursachten hohen finanziellen Aufwand auch aus Platzgründen nicht immer möglich, solche Überlastsicherungen insbesondere in sehr kompakte bzw. preisgünstige Geräte einzubauen.

Aufgabe der Erfindung ist es, eine Ansteuerung für einen an einem Spannungsnetz mit zwei Netzstromanschlüssen (A, B) betriebenen, insbesondere in eine bewegbare und/oder handgeführte Maschine integrierten Elektromotor mit zumindest zwei Netzstromanschlußklemmen (C, D) und den weiteren eingangs genannten Merkmalen 1) bis 5) anzugeben, mit der die vorgenannten Nachteile wie z. B. eine Überlastung des Elektromotors sicher vermieden werden und ferner sowohl der finanzielle als auch der fertigungstechnische Aufwand sowie der zum Einbau nötige Platzbedarf deutlich reduziert wird.

Diese Aufgabe wird gelöst durch eine Ansteuerung für einen an einem Spannungsnetz mit zwei Netzstromanschlüssen (A, B) betriebenen, insbesondere in eine bewegbare und/oder handgeführte Maschine integrierten Elektromotor mit zumindest zwei Netzstromanschlußklemmen (C, D) mit den folgenden Merkmalen:
1) die Netzstromanschlußklemme (C) (bzw. die Netzstromanschlußklemme (D)) ist über ein mit dem Elektromotor und einem Stellglied in Reihe geschaltetes, die Stromaufnahme des Elektromotors messendes Bauteil mit dem Netzstromanschluß (A) (bzw. dem Netzstromanschluß (B)) verbunden,
2) die Netzstromanschlußklemme (D) (bzw. die Netzstromanschlußklemme (C)) ist mit dem Netzstromanschluß (B) (bzw. dem Netzstromanschluß (A)) verbunden,
3) ein Microcontroller ist jeweils mit dem die Stromaufnahme des Elektromotors messenden Bauteil und dem Stellglied verbunden und
4) die Ansteuerung weist einen Schalter wie z. B. einen An-/Aus-Schalter, ein Potentiometer, ein Tastenfeld oder dergleichen zur Aktivierung des Elektromotors auf und
5) ein mit einem Netzstromanschluß (A oder B) verbundener Phasendetektor (16) ist an dem Microcontroller (5) angeschlossen, wobei
6) der Phasendetektor (16) in den Microcontroller (5) integriert ist und
7) eine Signaleinrichtung wie z. B. eine Leuchtdiode (9), ein Summer (10) etc. zur Signalisierung von kritisch hohen Lastzuständen vorgesehen ist.

Hierdurch wird ein flexibel einstellbarer Überlastungsschutz geschaffen, da in dem Microcontroller jedem Belastungszustand ein genau definiertes Motor-Ansteuerungsverhalten zugeordnet werden kann, wodurch die Betriebssicherheit und die Lebensdauer des Elektromotors deutlich erhöht und der Platzbedarf nochmals reduziert wird.

Vorteilhafterweise kann das die Stromaufnahme des Elektromotors messende Bauteil in den Microcontroller integriert sein, so daß der Platzbedarf weiter verringert wird.

Erfindungsgemäß kann ein mit dem Netzstromanschluß verbundener Phasendetektor an dem Microcontroller angeschlossen sein, so daß auch die Drehzahlsteuerung des Elektromotors durch den Microcontroller erfolgen kann, wobei sowohl Vollwellen- als auch Phasenanschnittsteuerung oder Pulsweitenmodulation möglich ist. Ebenfalls kann eine beliebige Anlaufkennlinie gefahren werden, wie z. B. Sanftanlauf (langsames Hochfahren der Drehzahl) und eine Inbetriebnahme der Maschine lediglich aus der "Aus"-Stellung des An-/Aus-Schalters möglich sein. Hierdurch wird vermieden, daß z. B. nach einem Stromausfall bei wieder einsetzender Stromversorgung oder bei Herstellen des Stromanschlusses bei auf "An" stehendem An-/Aus-Schalter die Maschine einfach anläuft, was sehr gefährlich sein kann. Auch kann der Microcontroller eine Überbrückung der Überlastvorrichtung im Anlauffall beinhalten.

Bei einem bevorzugten Ausführungsbeispiel der Erfindung kann der Microcontroller durch wenigstens eine, insbesondere variable einstellbare Führungsgröße wie z. B. Drehzahl, Drehmoment etc. steuerbar sein, so daß zum einen verschiedene Betriebszustände eingestellt werden können und zum anderen z. B. Maximalwerte für bestimmte Kennwerte festlegbar sind.

Vorteilhafterweise kann(können) die Führungsgröße(n) durch (jeweiliges) Verändern eines externen Widerstandes, z. B. durch Verstellen eines Potentiometers bzw. durch Bedienung eines Tastenfeldes einstellbar sein, so daß entweder eine stufenlose Einstellung des gewünschten Betriebszustandes/Maximalwertes oder aber eine ganz konkrete Eingabe eines Kennwertes möglich ist.

Bei einem bevorzugten Ausführungsbeispiel der Erfindung kann der Schalter als Führungsgröße an den Microcontroller angeschlossen sein, so daß zum einen der Schalter nicht im Laststromkreis angeordnet ist und insofern kleiner ausgelegt werden kann und zum anderen die Schaltersignale durch den Microcontroller beeinflußt werden können z. B. zum Ausgleich von zufälligen, ungewollten Schwankungen der Führungsgröße (Glätten des Signals), zur Begrenzung der Änderungsgeschwindigkeit bei gewollten Betriebszustandsänderungen durch den Maschinenbediener etc..

Es ist zumindest eine Signaleinrichtung wie z. B. eine Leuchtdiode, ein Summer etc. zur Signalisierung von kritisch hohen Lastzuständen vorgesehen, so daß durch Erkennen des kritischen Bereiches durch den Benutzer eine Verringerung des Lastzustandes möglich ist und ein Auftreten von Überlast insofern bereits im Vorfeld vermieden werden kann.

Erfindungsgemäß kann das Stellglied ein Relais, ein Triac, ein Thyristor oder ein Leistungstransistor sein, so daß je nach den anwendungsspezifischen Anforderungen das am besten geeignete Bauteil eingesetzt werden kann und eine kostenintensive Überdimensionierung vermieden werden kann.

Vorteilhafterweise kann das die Stromaufnahme des Elektromotors messende Bauteil ein I/U-Wandler, wie z. B. ein Meßwiderstand oder ein Hallgenerator sein, insbesondere mit nachgeschalteter Umform-/Verstärker-Elektronik, so daß in Abhängigkeit von den spezifischen Anforderungen durch Einsatz des am besten geeigneten Bauteils vermeidbare Kosten aufgrund von Überdimensionierung und nicht benötigter Meßgenauigkeit eingespart werden können.

Erfindungsgemäß kann der Microcontroller zumindest einen weiteren elektrischen Verbraucher mit wenigstens zwei Netzstromanschlußklemmen (E, F), insbesondere mittels wenigstens eines weiteren Stellgliedes und eines weiteren die Stromaufnahme des elektrischen Verbrauchers messenden Bauteils steuern, so daß neben der Hauptfunktion auch andere Nebenfunktionen durch den bereits vorhandenen Microcontroller gesteuert, geregelt und gegebenenfalls. auch gegen Überlast gesichert werden können.

Weiter kann zur Stromversorgung des Stellgliedes und/oder des weiteren Stellgliedes und/oder des die Stromaufnahme des Elektromotors messenden Bauteils und/oder des weiteren die Stromaufnahme des elektrischen Verbrauchers messenden Bauteils und/oder des Phasendetektors und/oder der Signaleinrichtung(en) und/oder zur Stromversorgung der Pührungsgrößen wenigstens ein insbesondere zentrales Netzteil an die Netzstromanschlüsse (A, B) angeschlossen und mit den Funktionseinheiten verbunden sein, so daß bei Gewährleistung der notwendigen Stromversorgung der Platzbedarf reduziert wird.

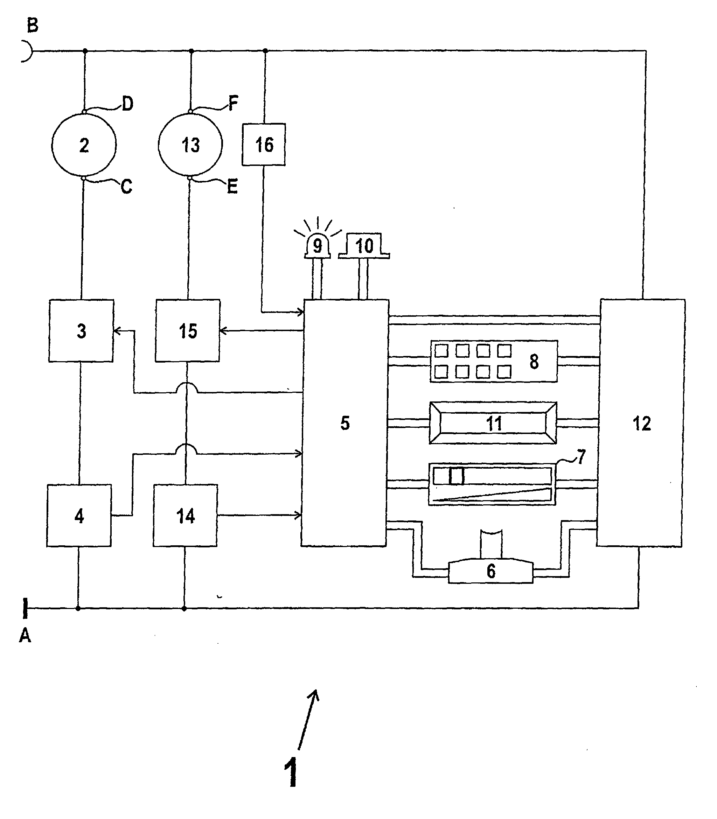

Im folgenden wird ein in der Zeichnung dargestelltes Ausführungsbeispiel der Erfindung erläutert. Die einzige Figur zeigt eine Ansteuerung 1 für einen Elektromotor 2 mit Netzstromanschlußklemmen (C, D). Der Elektromotor 2 ist in eine in der Zeichnung nicht dargestellte Schlagbohrmaschine integriert und wird an einem Spannungsnetz mit zwei Netzstromanschlüssen (A, B) betrieben.

Die Netzstromanschlußklemme (D) ist mit dem Netzstromanschluß (B) verbunden und die Netzstromanschlußklemme (C) ist über ein mit einem als Triac ausgebildeten Stellglied 3 in Reihe geschaltetes und als I/U-Wandler ausgebildetes, die Stromaufnahme des Elektromotors 2 messendes Bauteil 4 mit dem Netzstromanschluß (A) verbunden. Sowohl Stellglied 3 als auch das die Stromaufnahme des Elektromotors 2 messende Bauteil 4 sind mit einem Microcontroller 5 verbunden. Weiter ist ein als mit einer An-/Aus-Schaltfunktion versehenes Potentiometer ausgebildeter Schalter 6 zur Bedienung der Bohrmaschine an den Microcontroller 5 angeschlossen. Ebenfalls sind ein als Drehschalter ausgebildetes Potentiometer 7, ein Tastenfeld 8, eine Leuchtdiode 9 und ein Summer 10 sowie eine als LCD ausgebildete Anzeigeeinheit 11 am Microcontroller 5 angeschlossen. Über ein an die Netzstromanschlüsse (A, B) angeschlossenes zentrales Netzteil 12 wird sowohl das Tastenfeld 8, die Anzeigeeinheit 11 als auch der Microcontroller 5 mit Strom versorgt.

Das Schlagwerk der Schlagbohrmaschine wird von einem ebenfalls als Elektromotor ausgebildeten weiteren elektrischen Verbraucher 13 mit Netzstromanschlußklemmen (E, F) angetrieben. Die Netzstromanschlußklemme (F) ist mit dem Netzstromanschluß (B) verbunden und die Netzstromanschlußklemme (E) ist über ein mit einem die Stromaufnahme des elektrischen Verbrauchers 13 messenden Bauteil 14 in Reihe geschaltetes Stellglied 15 mit dem Netzstromanschluß (A) verbunden. Das Bauteil 14 und das Stellglied 15 sind wiederum an den Microcontroller 5 angeschlossen.

Weiterhin ist ein Phasendetektor 16, der zum einen mit dem Netzstromanschluß (B) und zum anderen mit dem Microcontroller 5 verbunden ist, zur wahlweisen Vollwellen- oder Phasenanschnitts-Drehzahl-Steuerung des Elektromotors 2 vorgesehen.

Im folgenden wird die Funktionsweise der Ansteuerung der Schlagbohrmaschine kurz erläutert. Über das Potentiometer 7 und das Tastenfeld 8 werden bestimmte Betriebszustände voreingestellt, wobei die Einstellung in der Anzeigeeinheit 11 angezeigt wird und insofern kontrolliert werden kann. Über den Schalter 6 erfolgt die Bedienung der Schlagbohrmaschine.

Im Betrieb steuert der Microcontroller 5 die Drehzahl des Elektromotors 2 und des weiteren elektrischen Verbrauchers 13 und verarbeitet die Daten des die Stromaufnahme des Elektromotors 2 messenden Bauteils 4 und des die Stromaufnahme des weiteren elektrischen Verbrauchers 13 messenden Bauteils 14.

Entsprechend seiner Programmierung und den durch das Potentiometer 7 und das Tastenfeld 8 eingestellten Kennwerten steuert der Microcontroller 5 das Stellglied 3 und das weitere Stellglied 15 an. Bei Erreichen eines kritischen Lastzustandes leuchtet die Leuchtdiode 7 auf und der Summer 10 beginnt zu summen. Sofern der Lastzustand nicht geändert wird und der Betrieb im kritischen Bereich weiterhin erfolgt, kann je nach Programmierung des Microcontrollers 5 entweder nach einem vorbestimmten Zeitintervall eine Reduzierung der Leistung oder ein komplettes Abschalten der Schlagbohrmaschine erfolgen. Auch kann, sofern der Microcontroller 5 entsprechend programmiert ist, die Geschwindigkeit des Lastanstieges gemessen werden und bei zu hohen Steigerungsraten ebenfalls entweder Leistung reduziert werden oder aber eine komplette Abschaltung erfolgen.

Weiterhin können in den Microcontroller zusätzliche Funktionen integriert sein wie z. B. Überbrückung der Überlastsicherung im Anlauffall, Fahren einer beliebigen Anlaufkennlinie wie z. B. Sanftanlauf, Inbetriebnahme der Maschine nur aus der "Aus"-Stellung des An-/Aus-Schalters heraus etc..

## Patentansprüche

1. Ansteuerung (1) für einen an einem Spannungsnetz mit wenigstens zwei Netzstromanschlüssen (A, B) betriebenen, insbesondere in eine bewegbare und/oder handgeführte Maschine integrierten Elektromotor (2) mit zumindest zwei Netzstromanschlußklemmen (C, D) mit den folgenden Merkmalen:
1) die Netzstromanschlußklemme (C) (bzw. die Netzstromanschlußklemme (D)) ist über ein mit dem Elektromotor (2) und einem Stellglied (3) in Reihe geschaltetes, die Stromaufnahme des Elektromotors (2) messendes Bauteil (4) mit dem Netzstromanschluß (A) (bzw. dem Netzstromanschluß (B)) verbunden,
2) die Netzstromanschlußklemme (D) (bzw. die Netzstromanschlußklemme (C)) ist mit dem Netzstromanschluß (B) (bzw. dem Netzstromanschluß (A)) verbunden,
3) ein Microcontroller (5) ist jeweils mit dem die Stromaufnahme des Elektromotors (2) messenden Bauteil (4) und dem Stellglied (3) verbunden,
4) die Ansteuerung (1) weist einen Schalter (6) wie z. B. einen An-/Aus-Schalter, ein Potentiometer (7), ein Tastenfeld (8) oder dergleichen zur Aktivierung des Elektromotors (2) auf und
5) ein mit einem Netzstromanschluß (A oder B) verbundener Phasendetektor (16) ist an dem Microcontroller (5) angeschlossen, **dadurch gekennzeichnet, daß**
6) der Phasendetektor (16) in den Microcontroller (5) integriert ist und
7) eine Signaleinrichtung wie z. B. eine Leuchtdiode (9), ein Summer (10) etc. zur Signalisierung von kritisch hohen Lastzuständen vorgesehen ist.

2. Ansteuerung (1) nach Anspruch 1, **dadurch gekennzeichnet, daß** das die Stromaufnahme des Elektromotors (2) messende Bauteil (4) in den Microcontroller (5) integriert ist.

3. Ansteuerung (1) nach Anspruch 1 oder 2, **dadurch gekennzeichnet, daß** der Microcontroller (5) durch wenigstens eine, insbesondere variabel einstellbare Führungsgröße wie z. B. Drehzahl, Drehmoment etc. steuerbar ist.

4. Ansteuerung (1) nach Anspruch 3, **dadurch gekennzeichnet, daß** die Führungsgröße(n) durch jeweiliges Verändern eines externen Widerstandes, z. B. durch Verstellen eines Potentiometers (7) einstellbar ist.

5. Ansteuerung (1) nach einem der Ansprüche 1 bis 4, **dadurch gekennzeichnet, daß** der Schalter (6) als Führungsgröße an den Microcontroller (5) angeschlossen ist.

6. Ansteuerung (1) nach einem der Ansprüche 1 bis 5, **dadurch gekennzeichnet, daß** das Stellglied (3) ein Relais ist.

7. Ansteuerung (1) nach einem der Ansprüche 1 bis 5, **dadurch gekennzeichnet, daß** das Stellglied (3) ein Triac ist.

8. Ansteuerung (1) nach einem der Ansprüche 1 bis 5, **dadurch gekennzeichnet, daß** das Stellglied (3) ein Thyristor ist.

9. Ansteuerung (1) nach einem der Ansprüche 1 bis 5, **dadurch gekennzeichnet, daß** das Stellglied (3) ein Leistungstransistor ist.

10. Ansteuerung (1) nach einem der Ansprüche 1 bis 9, **dadurch gekennzeichnet, daß** das die Stromaufnahme des Elektromotors (2) messende Bauteil (4) ein I/U-Wandler ist.

11. Ansteuerung (1) nach einem der Ansprüche 1 bis 9, **dadurch gekennzeichnet, daß** das die Stromaufnahme des Elektromotors (2) messende Bauteil (4) ein Meßwiderstand ist.

12. Ansteuerung (1) nach einem der Ansprüche 1 bis 9, **dadurch gekennzeichnet, daß** das die Stromaufnahme des Elektromotors (2) messende Bauteil (4) ein Hallgenerator ist.

13. Ansteuerung (1) nach einem der Ansprüche 1 bis 9, **dadurch gekennzeichnet, daß** der Microcontroller (5) zumindest einen weiteren elektrischen Verbraucher (13) mit wenigstens zwei Netzstromanschlußklemmen (E, F), insbesondere mittels wenigstens eines weiteren Stellgliedes (15) und eines weiteren die Stromaufnahme des elektrischen Verbrauchers (13) messenden Bauteils (14) steuert.

14. Ansteuerung (1) nach einem der Ansprüche 1 bis 13, **dadurch gekennzeichnet, daß** zur Stromversorgung des Stellgliedes (3) und/oder des Stellgliedes (15) und/oder des die Stromaufnahme des Elektromotors (2) messenden Bauteils (4) und/oder des die Stromaufnahme des elektrischen Verbrauchers (13) messenden Bauteils (14) und/oder des Phasendetektors (16) und/oder der Signaleinrichtung(en) und/oder zur Stromversorgung der Führungsgrößen wenigstens ein insbesondere zentrales Netzteil (12) an die Netzstromanschlüsse (A, B) angeschlossen und mit den Funktionseinheiten verbunden ist.

## Claims

1. Actuating means (1) for an electric motor (2), which is operated on a voltage network with at least two power supply connections (A, B) and has at least two power supply connecting terminals (C, D), which motor is more especially incorporated in a displaceable and/or manually guided machine said actuating means having the following features:
1) the power supply connecting terminal (C) (or respectively the power supply connecting terminal (D)) is connected to the power supply connection (A) (or respectively the power supply connection (B)) via a component part (4) which is connected in series with the electric motor (2) and a control member (3) and measures the current consumption of the electric motor (2),
2) the power supply connecting terminal (D) (or respectively the power supply connecting terminal (C)) is connected to the current supply connection (B) (or respectively the power supply connection (A)),
3) a microcontroller (5) is respectively connected to the component part (4), which measures the current consumption of the electric motor (2), and the control member (3),
4) the actuating means (1) includes a switch (6), such as, for example, an on/off switch, a potentiometer (7), a key pad (8) or the like, for the activation of the electric motor (2), and
5) a phase detector (16), which is connected to a power supply connection (A or B), communicates with the microcontroller (5),
**characterised in that**
6) the phase detector (16) is incorporated in the microcontroller (5), and
7) a signalling device, such as, for example, a light-emitting diode (9), a buzzer (10), etc., is provided in order to signal critically high load states.

2. Actuating means (1) according to claim 1, **characterised in that** the component part (4), which measures the current consumption of the electric motor (2), is incorporated in the microcontroller (5).

3. Actuating means (1) according to claim 1 or 2, **characterised in that** the microcontroller (5) is controllable by at least one, more especially variably adjustable, guide parameter such as, for example, speed, torque, etc.

4. Actuating means (1) according to claim 3, **characterised in that** the guide parameter/parameters is/are adjustable by respectively changing an external resistance, e.g. by adjusting a potentiometer (7).

5. Actuating means (1) according to one of claims 1 to 4, **characterised in that** the switch (6), as the guide parameter, communicates with the microcontroller (5).

6. Actuating means (1) according to one of claims 1 to 5, **characterised in that** the control member (3) is a relay.

7. Actuating means (1) according to one of claims 1 to 5, **characterised in that** the control member (3) is a triac.

8. Actuating means (1) according to one of claims 1 to 5, **characterised in that** the control member (3) is a thyristor.

9. Actuating means (1) according to one of claims 1 to 5, **characterised in that** the control member (3) is a power transistor.

10. Actuating means (1) according to one of claims 1 to 9, **characterised in that** the component part (4), which measures the current consumption of the electric motor (2), is a current-voltage converter.

11. Actuating means (1) according to one of claims 1 to 9, **characterised in that** the component part (4), which measures the current consumption of the electric motor (2), is a measuring resistor.

12. Actuating means (1) according to one of claims 1 to 9, **characterised in that** the component part (4), which measures the current consumption of the electric motor (2), is a Hall generator.

13. Actuating means (1) according to one of claims 1 to 9, **characterised in that** the microcontroller (5) controls at least one additional electrical consumer unit (13) having at least two power supply connecting terminals (E, F), more especially by means of at least one additional control member (15) and one additional component part (14), which measures the current consumption of the electrical consumer unit (13).

14. Actuating means (1) according to one of claims 1 to 13, **characterised in that**, for the power supply of the control member (3) and/or the control member (15) and/or the component part (4), which measures the current consumption of the electric motor (2), and/or the component part (14) which measures the current consumption of the electrical consumer unit (13), and/or the phase detector (16) and/or the signalling device(s) and/or for the power supply of the guide parameters, at least one; more especially central, power pack (12) communicates with the power supply connections (A, B) and is connected to the functional units.

## Revendications

1. Commande (1) pour un moteur électrique (2) fonctionnant sur un réseau électrique avec deux connexions de réseau (A, B), en particulier intégré dans une machine mobile et/ou guidée à la main, présentant au moins deux bornes de connexion (C, D) et les caractéristiques suivantes :
1) la borne de connexion (C) (respectivement la borne de connexion (D)) est reliée à la connexion de réseau (A) (respectivement à la connexion de réseau (B)) par l'intermédiaire d'un composant (4) mesurant la consommation de courant du moteur électrique (2), branché en série avec le moteur électrique (2) et un actionneur (3),
2) la borne de connexion (D) (respectivement la borne de connexion (C)) est reliée à la connexion de réseau (B) (respectivement à la connexion de réseau (A)),
3) un microcontrôleur (5) est relié au composant (4) mesurant la consommation de courant du moteur électrique (2) et à l'actionneur (3),
4) la commande (1) présente un commutateur (6), par exemple un commutateur marche/arrêt, un potentiomètre (7), un clavier (8) ou analogue pour l'activation du moteur électrique (2) et
5) un détecteur de phase (16) relié à une connexion de réseau (A ou B) est raccordé au microcontrôleur (5), **caractérisée par le fait que**
6) le détecteur de phase (16) est intégré dans le microcontrôleur (5) et
7) un dispositif de signalisation, par exemple une diode électroluminescente (9), un ronfleur (10), etc. est prévu pour signaler les états de charge critiques.

2. Commande (1) selon la revendication 1, **caractérisée par le fait que** le composant (4) mesurant la consommation de courant du moteur électrique (2) est intégré dans le microcontrôleur (5).

3. Commande (1) selon la revendication 1 ou 2, **caractérisée par le fait que** le microcontrôleur (5) peut être commandé par au moins une grandeur de référence, en particulier réglable de façon variable, par exemple la vitesse, le couple, etc.

4. Commande (1) selon la revendication 3, **caractérisée par le fait que** la/les grandeur(s) de référence peu(ven)t être réglée(s) par modification d'une résistance externe, par exemple par réglage d'un potentiomètre (7).

5. Commande (1) selon l'une des revendications 1 à 4, **caractérisée par le fait que** le commutateur (6) est raccordé au microcontrôleur (5) en tant que grandeur de référence.

6. Commande (1) selon l'une des revendications 1 à 5, **caractérisée par le fait que** l'actionneur (3) est un relais.

7. Commande (1) selon l'une des revendications 1 à 5, **caractérisée par le fait que** l'actionneur (3) est un triac.

8. Commande (1) selon l'une des revendications 1 à 5, **caractérisée par le fait que** l'actionneur (3) est un thyristor.

9. Commande (1) selon l'une des revendications 1 à 5, **caractérisée par le fait que** l'actionneur (3) est un transistor de puissance.

10. Commande (1) selon l'une des revendications 1 à 9, **caractérisée par le fait que** le composant (4) mesurant la consommation de courant du moteur électrique (2) est un convertisseur I/U.

11. Commande (1) selon l'une des revendications 1 à 9, **caractérisée par le fait que** le composant (4) mesurant la consommation de courant du moteur électrique (2) est une résistance de précision.

12. Commande (1) selon l'une des revendications 1 à 9, **caractérisée par le fait que** le composant (4) mesurant la consommation de courant du moteur électrique (2) est un générateur Hall.

13. Commande (1) selon l'une des revendications 1 à 9, **caractérisée par le fait que** le microcontrôleur (5) commande au moins un consommateur électrique (13) supplémentaire possédant au moins deux bornes de connexion (E, F), en particulier au moyen d'au moins un actionneur (15) supplémentaire et d'un composant (14) supplémentaire mesurant la consommation de courant du consommateur électrique (13).

14. Commande (1) selon l'une des revendications 1 à 13, **caractérisée par le fait qu'**au moins un bloc d'alimentation, en particulier central, est raccordé aux connexions de réseau (A, B) et relié aux unités fonctionnelles pour l'alimentation électrique de l'actionneur (3) et/ou de l'actionneur (15) et/ou du composant (4) mesurant la consommation de courant du moteur électrique (2) et/ou du composant (14) mesurant la consommation de courant du consommateur électrique (13) et/ou du détecteur de phase (16) et/ou du/des dispositif(s) de signalisation et/ou pour l'alimentation électrique des grandeurs de référence.
